# EUROPEAN PATENT SPECIFICATION

(11) **EP 0 387 048 B1**
(45) Date of publication and mention of the grant of the patent: **21.08.1996**
(21) Application number: 90302458.6
(22) Date of filing: 08.03.1990
(51) Int. Cl.: H04N 5/44, H04N 7/01, H04N 7/32, H04N 5/94, H04N 7/24, H04N 9/88

(54) **Interpolated signal producing circuits**
Schaltungen zur Erzeugung eines interpolarisierten Signals
Circuits produisant un signal interpolé

(30) Priority: 10.03.1989 JP 58260/89
(43) Date of publication of application: 12.09.1990
(73) Proprietor: SONY CORPORATION, Tokyo 141 (JP)
(72) Inventor: Tanaka, Yutaka, c/o Patents Division, Shinagawa-ku, Tokyo 141 (JP)
(74) Representative: Cotter, Ivan John

(56) References cited:
- US-A- 4 639 773
- PATENT ABSTRACTS OF JAPAN vol. 9, no. 47 (E-299)(1770) 27 February 1985, & JP-A- 59 185420
- IEEE TRANSACTIONS ON CONSUMER ELECTRONICS. vol. 31, no. 3, August 1985, NEW YORK US pages 240 - 253; Okada et al.: "FLICKER-FREE NON INTERLACED RECEIVING SYSTEM FOR STANDARD COLOR TV SIGNALS"
- PATENT ABSTRACTS OF JAPAN vol. 8, no. 66 (E-234)(1503) 28 March 1984, & JP-A- 58 215175

## Description

This invention relates to interpolated signal producing circuits. Such circuits may be used, for example, for doubling scanning lines, or for compensating for dropped-out pixels.

In a recently proposed television receiver, a reproduced picture of high definition is to be obtained by increasing the number of pixels (picture elements) in each field of a received video signal. With this proposal, resolution in the vertical direction of the reproduced picture is improved by a so-called double-scanning system, in which horizontal scanning lines in one field of the video signal are doubled and non-interlace scanning is carried out at each field. On the other hand, resolution in the horizontal direction of the reproduced picture is improved by a so-called sub-sampling system in which the number of pixels within one horizontal scanning line is doubled by inserting interpolated signals therebetween.

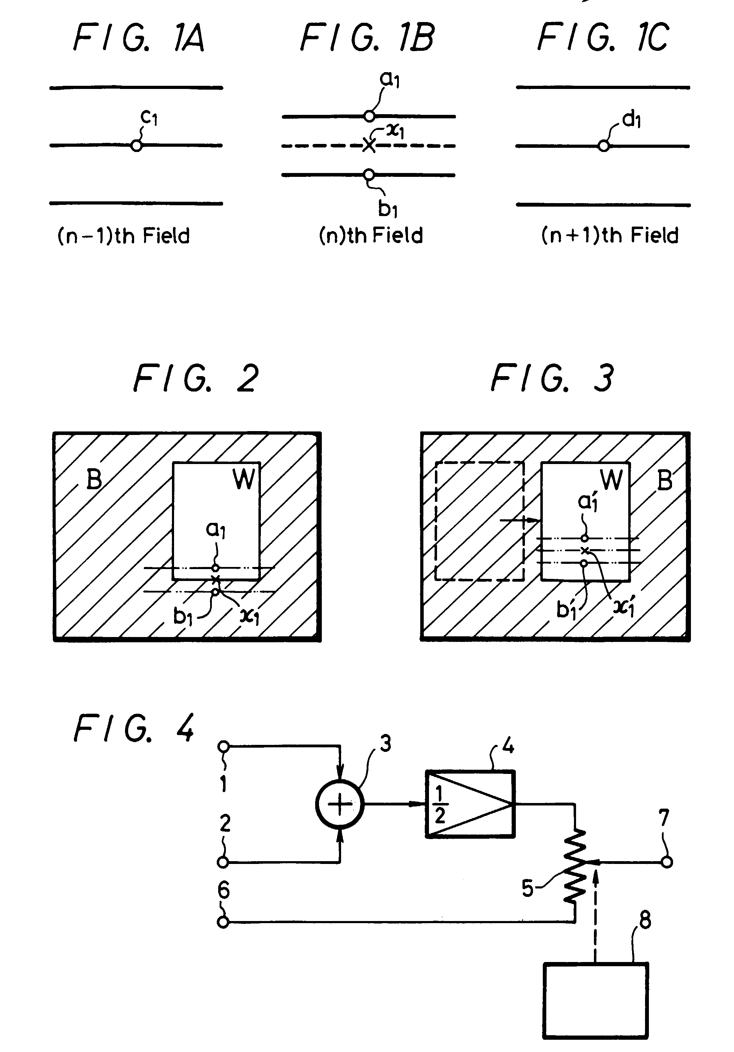

A case in which horizontal scanning lines are doubled in order to effect the double-scanning will now be explained with reference to Figures 1A to 1C. An interpolated horizontal scanning line is shown by a dashed line in Figure 1B to be provided between two adjacent horizontal lines of an (n)th field, and a predetermined pixel x1 is formed in this interpolated horizontal scanning line either by an interfield interpolation method or by an intrafield interpolation method.

In the intrafield interpolation method, the amplitude of the interpolated pixel x1 is determined from the amplitudes of adjacent pixels a1 and b1 of upper and lower horizontal scanning lines, as x1 = (a1 + b1)/2.

In the interfield interpolation method, the amplitude of the interpolated pixel x1 is determined from a pixel c1 (Figure 1A) located at the same position as the interpolated pixel x1, but in an (n-1)th field, that is, one field before the (n)th field.

Advantages and disadvantages of the interfield interpolation method and the intrafield interpolation method will now be described and, in connection therewith, it will be assumed that a level "1" indicates white and a level "0", indicates black. Further, it will be assumed that a still picture to be reproduced is shown in Figure 2, wherein a rectangular white image W appears against a black background B. In this case, an interpolated pixel x1, formed on the boundary portion between the white image W and the black background B, is represented as x1 = (a1 + b1)/2 = (1 + 0)/2 = 0.5 according to the intrafield interpolated method. On the other hand, the same interpolated pixel is represented as x1 = c1 = 1 (where pixel c1 is located at the same position in the preceding field and is assumed to be white) according to the interfield interpolation method. Thus, the interfield interpolation method can correctly form the interpolated pixel, whereas the intrafield interpolation method provides a colour level which is a mixture of white and black at the boundary portion, and thereby results in an indistinct boundary between the white image and the black background.

Further, in the case of a real moving picture in which a rectangular white image W is moved relative to a black background B, as shown in Figure 3, from a position shown by a dashed-line in an (n-1)th field to the position shown in full lines in the next or (n)th field, so that the white images W of the (n-1)th field and of the (n)th field do not overlap each other, then an interpolated pixel x1′ formed within the white image in is represented as x1′ = (a1′ + b1′)/2 = 1 according to the intrafield interpolation method. In the same case, the interpolated pixel is represented as x1′ = c1′ = 0 (c1′ is a pixel in the same position as the interpolation pixel x1′ but in the preceding field) according to the interfield interpolation method. As a result, for the situation shown in Figure 3, the intrafield interpolation method can correctly form the interpolated pixel x1′ whereas the interfield interpolation method causes a black pixel to occur in the white image W, thus forming an erroneous interpolated signal.

In order to avoid the above-described defects, a combination of the interfield interpolation method and the intrafield interpolation method has been proposed. With this proposal, motion in a picture is initially detected, and an interpolated pixel signal x1 is formed with respect to a still picture portion by the interfield interpolation method, whereas an interpolation pixel signal x1 is formed with respect to a moving picture portion by the intrafield interpolation method. A circuit employing this combination of the interfield and intrafield interpolation methods is shown in Figure 4, in which an input terminal 1 receives a signal at a point a1 on a predetermined horizontal scanning line, hereinafter referred to as the (m)th line, and an input terminal 2 receives a signal at a point b1 on a predetermined horizontal scanning line hereinafter referred to as (m+1)th line. The signals a1 and b1 applied to the input terminals 1 and 2 are supplied to an adder 3 and the resultant signal is supplied to an attenuator 4 in which its signal level is attenuated by one-half. The attenuated signal is supplied to one end of the resistance element of a variable resistor 5. A signal at a point c1 on the (m)th line of the preceding or (n-1)th field is applied to an input terminal 6, and is fed therefrom to the other end of the resistance element of the variable resistor 5 whose slide contact is connected to an output terminal 7 from which an interpolation signal is derived.

The slide contact of the variable resistor 5 is changed in position under the control of a movement detection circuit 8. When movement in an input video signal is detected by the circuit 8, the slide contact of the variable resistor 5 is moved to one end of the resistance element, so that an interpolation signal provided by the intrafield interpolation method is supplied to the output terminal 7. When the input video signal is detected to be a still picture by the movement detection circuit 8, the slide contact of the variable resistor 5 is moved to the other end of the resistance element for thereby supplying to the terminal 7 an interpolation signal provided by the interfield interpolation method. In this way, the intrafield in terpolation method and the interfield interpolation method are selectively used on the basis of whether or not movement in the input video signal is detected by the movement detection circuit 8.

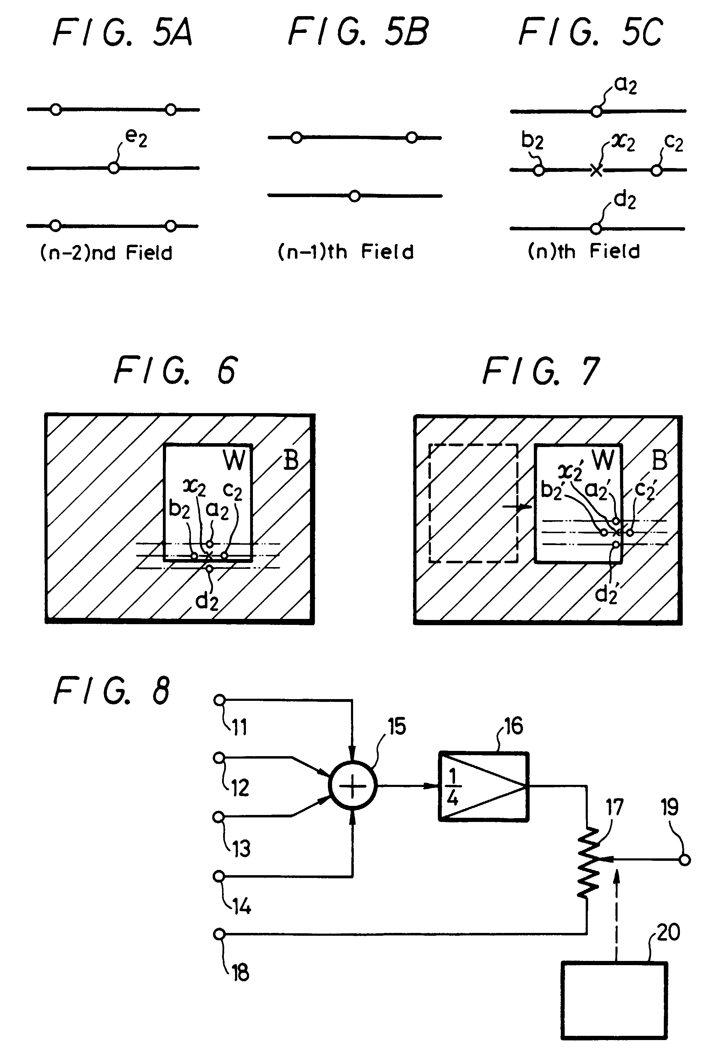

It is also known to employ sub-sampling for doubling the number of pixels within each horizontal scanning line. For example, as shown in Figure 5C, an interpolated pixel x2 may be provided between pixels b2 and c2 on a certain horizontal scanning line of an (n)th field by either an intrafield interpolation method or an interframe interpolation method. In the case of the intrafield interpolation method, the interpolated pixel x2 is formed from adjacent pixels a2 and d2 on the adjacent upper and lower horizontal scanning lines and the adjacent pixels b2 and c2 on the same horizontal scanning line so that x2 = (a2 + b2 + c2 + d2)/4 is established. In the case of the interframe interpolation method, the interpolated pixel x2 is formed from a pixel e2 located at the same position as that of the interpolated pixel x2, but in the (n-2)nd field (Figure 5A) which is one frame before the (n)th field, and x2 = e2 is established.

The results of these two methods will be compared for the case of a still picture formed of a black background B with a rectangular white image in located within the background B, as shown in Figure 6. An interpolated pixel x2 formed at the boundary portion of the white image W by the intraframe interpolation method (assuming that only the pixel d2 on the lower horizontal line is located within the black background B) is expressed as x2 = (a2 + b2 + c2 + d2)/4 = (1 + 1 + 1 + 0)/4 = 0.75. On the other hand, interpolated pixel x2, formed by the interframe interpolation method, is expressed as x2 = e2 = 1. Therefore, it will be seen that, in the case of a still picture, the interpolated pixel is correctly formed by the interframe interpolation method, whereas the intrafield interpolation method causes a colour level corresponding to a mixture of white and black to occur at the boundary portion which is thereby made indistinct.

In the case of a real moving picture in which a rectangular white image W is moved within a black background B, as shown in Figure 7, and assuming that the white portion W of the preceding frame, or (n-2)nd field, is located as shown by a broken line in Figure 7 and does not overlap the range of the white image W of the present or (n)th field, if an interpolated pixel x2′ is to be formed at a boundary portion of the white image W where only the adjacent pixel c2′ on the right is located within the black background B and the other pixels a2′, b2′ and d2′ are located within the white image W, then with the intrafield interpolation method, the interpolated pixel x2′ is expressed as x2′ = (a2′ + b2′ + c2′ + d2′)/4 = (1 + 1 + 0 + 1)/4 = 0.75. On the other hand, with the interframe interpolation method, the interpolation pixel x2′ is expressed as x2′ = e2′ = 0 (the pixel e2′ corresponds to the interpolated pixel x2′ of the preceding frame). Therefore, it is apparent that the correct interpolated pixel is formed by the intrafield interpolation method, whereas, the interframe interpolation method provides a black pixel within the white image W, that is, an erroneous interpolation signal is formed.

In order to avoid the above-described defects, it has been proposed that, when interpolation is carried out, motion of the picture is detected, and the interpolated pixel is x2 formed by the interframe interpolation method for a still picture portion, whereas, the interpolated pixel x2′ is formed by the intrafield interpolation method for a real moving picture portion.

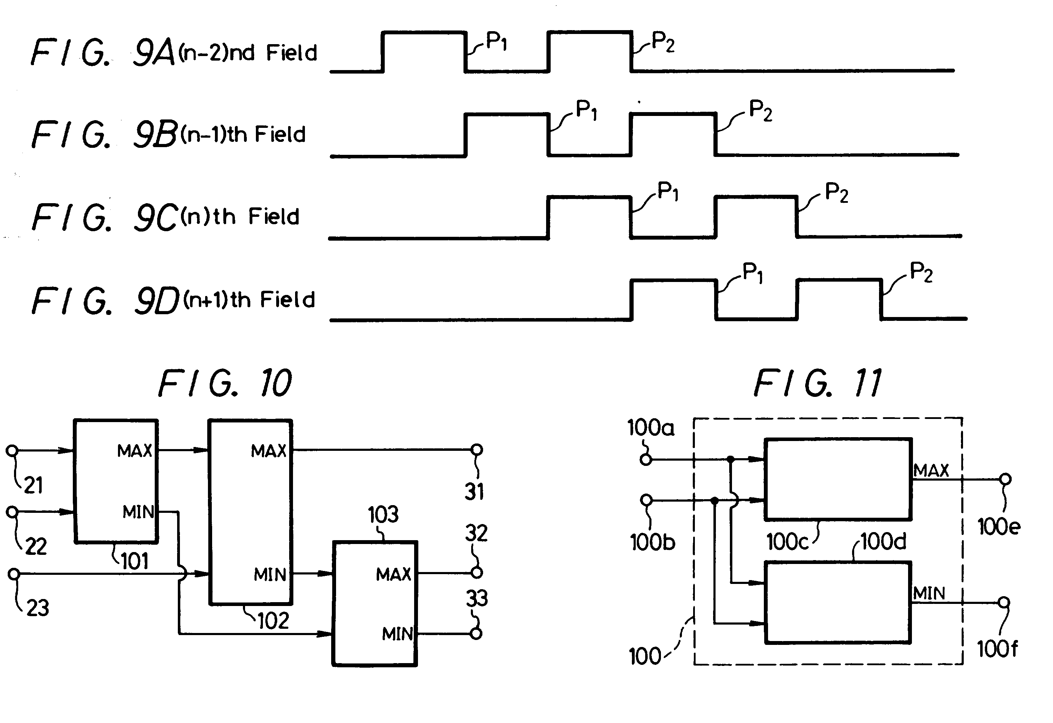

More specifically, in a circuit shown in Figure 8 for combining the intrafield and interframe interpolation methods, a signal at a point b2 on a predetermined horizontal scanning line, which is hereinafter referred to as (m)th line in an (n)th field, is applied to an input terminal 11, and a signal at a point c2 also on the (m)th line of the (n)th field is supplied to an input terminal 12. A signal at a point a2 on an (m-1)th line is supplied to an input terminal 13, and a signal at a point d2 on an (m+1)th line is supplied to an input terminal 14. These signals applied to the input terminals 11, 12, 13 and 14 are supplied to an adder 15, and the resulting added signal is supplied to an attenuator 16, in which its signal level is attenuated to one-fourth. This attenuated or average signal is supplied to one end of the resistance element of a variable resistor 17. Further, a signal at the point e2 of the (m)th line of the (n-2)nd field, that is, one frame before the (n)th field, is applied to an input terminal 18, and is supplied therefrom to the other end of the resistance element of the variable resistor 17. A slide contact of the variable resistor 17 is connected to an output terminal 19 from which an interpolation signal may be derived. The slide contact of the variable resistor 17 is changed in position under the control of a movement detection circuit 20. Thus, when a movement is detected in an input video signal by the circuit 20, the slide contact of the variable resistor 17 is moved to one end of the resistance element for supplying to the output terminal 19 an interpolated signal produced by the intrafield interpolation method. Conversely, when the circuit 20 indicates that the input video signal is a still picture, the circuit 20 causes the slide contact of the variable resistor 17 to be moved to the other end of the resistance element for supplying an interpolated signal produced by the interframe interpolation method to the output terminal 19. In this way, the intrafield interpolation method and the interframe interpolation method are selectively used on the basis of whether or not motion in the picture is detected by the circuit 20.

It is apparent from the above that satisfactory interpolation cannot be achieved in either double-scanning or sub-sampling without detecting the motion of a picture and, in practice, it is very difficult to carry out perfect movement detection for the reasons described more fully below with reference to Figures 9A to 9D.

Figures 9A to 9D illustrate the assumed positions of two pulse signals P1 and P2 representing white portions on a predetermined horizontal line, and which are sequentially moved at the successive fields (n-2), (n-1), (n) and (n+1). When the pixel position of the pulse signal P1 of the (n)th field (Figure 9C) coincides with the pixel position of the pulse signal P2 of the (n-2)nd field, that is, one frame before (Figure 9A), if the movement detection is carried out on the basis of the pixel position of the pulse signal P1 of the (n)th field, then the pixel is detected as a still picture portion having no motion. In other words, in the illustrated states of Figures 9A and 9C, or of Figures 9B and 9D, the pulse signal P1 and the pulse signal P2 are at the same horizontal positions along the respective line, so that the difference between the frames at this pixel position cannot be detected from the signal level. As a result, an interpolated signal for a still picture may be produced as an interpolated signal for a real moving picture, so that an erroneous interpolated signal is produced and the image quality is thereby deteriorated. This is the reason for the frequent observation that interpolation-processing, intended to improve the image quality, causes instead a decrease in the vertical and/or horizontal resolution.

Further, the above-described movement detection circuit is complicated and expensive, and cannot be readily utilized with a television receiver.

Furthermore, when a drop-out occurs in a reproduced image signal, or when the level of a reproduced image signal is lowered in a video apparatus, such as, a video tape reproducing apparatus, the signal portion in which the drop-out occurs is replaced with a signal, for example, from the preceding horizontal line, under the control of a drop-out detecting circuit, for preventing noise from occurring in the reproduced picture.

However, it is not always optimal to replace a drop-out signal with a signal from the preceding horizontal line. For example, in the case of a still picture, it may be better to replace the drop-out signal with a signal from an adjacent horizontal line of the preceding field. Such processing requires the use of a movement detection circuit similar to that used for the double-scanning and sub-sampling, and the movement detection circuit makes the circuit arrangement complicated. Therefore, movement detection has not usually been carried out, and a signal of the preceding horizontal line has usually been utilized as an interpolated signal.

Patent Abstracts of Japan, Vol 9, No 47 (E-299) [1770] relating to patent application JP-A-59/185420 describes an interpolated signal producing circuit comprising:
a delay circuit arrangement, including first, second and third delay circuits connected in series, for receiving a video signal and providing four proximate pixel signals;
a comparator arrangement, comprising first to third minimum circuits and first to third maximum circuits, for comparing amplitudes of said proximate pixel signals and determining an order of magnitudes of said amplitudes; and
averaging means for averaging a pair of said amplitudes determined according to the order and providing the resulting average signal as an interpolated signal.

In the known circuit, the delay circuits are such that two of the pixel signals relate to pixels in one field, and the other two pixel signals relate to pixels in fields which precede and succeed said one field.

An interpolated signal producing circuit according to one aspect of the present invention is characterised in that:
said second delay circuit has a delay time of one pixel period of said video signal, and each of said first and third delay circuits has a delay time equal to one horizontal line period of said video signal less one-half said pixel period, so that a second and third of said proximate pixel signals are derived at outputs of said first and second delay circuits respectively, and correspond to adjacent pixels in one horizontal line, and the first and fourth of the proximate pixel signals are derived at an input to said first delay circuit and at an output of the third delay circuit, respectively, and are situated on horizontal lines below and above said one horizontal line between said adjacent pixels in said one horizontal line, said four proximate pixel signals thus relating to pixels in the same field of the video signal; and
said first and second minimum circuits are arranged to determine a first minimum amplitude of the first and second pixel signals and a second minimum amplitude of the third and fourth pixel signals, respectively, said first and second maximum circuits are arranged to determine a first maximum amplitude of the first and second pixel signals and a second maximum amplitude of the third and fourth pixel signals, respectively, said third maximum circuit is arranged to determine a third maximum amplitude of the first and second minimum amplitudes, and said third minimum circuit is arranged to determine a third minimum amplitude of the first and second maximum amplitudes, whereby said pair of amplitudes which are averaged are the next to the largest and the next to the smallest.

The invention also provides an apparatus for sub-sampling a video signal so as to double the number of pixels within each horizontal scanning line of a displayed picture, the apparatus comprising:
a circuit according to said one aspect of the present invention;
means for timebase-compressing said second pixel signal and said interpolated signal; and
means for alternately outputting the timebase-compressed second pixel signal and interpolated signal as a sub-sampled video signal to be displayed.

Whether the input video signal represents a still picture or a real moving picture, it is possible to produce an optimum interpolated signal by a simplified circuit arrangement which need not include a movement detection circuit. Accordingly, a high resolution reproduced picture, in which each horizontal scanning line has an increased number of pixels, can be formed from the output video signal.

The invention will now be described by way of example with reference to the accompanying drawings, throughout which like parts are referred to by like references, and in which:
Figures 1A to 1C are schematic diagrams for explaining various types of interpolated signals for use in double-scanning;
Figure 2 is a schematic diagram of a reproduced still picture for explaining the effects of various types of interpolation in double-scanning;
Figure 3 is a schematic diagram of a reproduced real moving picture for explaining the effects of various types of interpolation in double-scanning;
Figure 4 is a schematic block diagram showing an example of a previously proposed interpolated signal producing circuit;
Figures 5A to 5C are schematic diagrams for explaining various types of interpolated signals for use in sub-sampling;
Figure 6 is a schematic diagram of a reproduced still picture for explaining the effects of various types of interpolation in sub-sampling;
Figure 7 is a schematic diagram of a reproduced real moving picture for explaining the effects of various types of interpolation in sub-sampling;
Figure 8 is a schematic block diagram showing another example of an interpolated signal producing circuit for use in connection with sub-sampling;
Figures 9A to 9D are waveform diagrams showing the level changes of pulse signals in successive fields for explaining operation of a motion detecting circuit;
Figures 10, 11, 12 and 13 are schematic block diagrams of respective interpolation filters used in embodiments of interpolated signal producing circuit in accordance with the present invention;
Figure 14 is a block diagram showing a first embodiment of interpolated signal producing circuit for doubling horizontal scanning lines of a displayed video picture;
Figure 15A to 15H are timing charts to which reference will be made in explaining operation of the embodiment of Figure 14;
Figure 16 is a block diagram showing a second embodiment of interpolated signal producing circuit for doubling horizontal scanning lines;
Figures 17A to 17G are timing charts to which reference will be made in explaining operation of the embodiment of Figure 16;
Figure 18 is a block diagram showing a third embodiment of interpolated signal producing circuit for sub-sampling;
Figures 19A to 19G are timing charts for explaining operation of the embodiment of Figure 18;
Figure 20 is a block diagram showing a fourth embodiment of interpolated signal producing circuit for compensating drop-outs in a video signal;
Figures 21A to 21C are timing charts to which reference will be made in explaining operation of the embodiment of Figure 20;
Figure 22 is a block diagram showing a fifth embodiment of interpolated signal producing circuit also for drop-out compensation; and
Figures 23A to 23C are timing charts for explaining operation of the embodiment of Figure 22.

The present invention will now be described in detail with reference to the drawings and, in order to understand the present invention more clearly, an interpolation filter that may be used in an interpolated signal producing circuit according to the present invention will first be explained with reference to Figure 10. The interpolation filter compares amplitudes of input signals in a logical fashion and produces an interpolation signal on the basis of a predetermined compared result. A similar logic filter has been previously proposed as a logic interpolation filter which separates a signal having a correlation by a logical operation, for example, as disclosed in our US patent specification US-A-4 524 382.

When an interpolation signal is to be produced for a video signal, for example, from three input signals, the logic filter is constructed as shown in Figure 10. More particularly, input signals applied to input terminals 21 and 22 are supplied to a first logical operating circuit 101 which discriminates the amplitudes of the respective signals. The first logical operating circuit 101, and subsequent logical operating circuits 102 and 103 in Figure 10, may each be formed of a logical operating circuit 100 as shown in Figure 11.

In the circuit 100, a signal applied to one input terminal 100a and a signal applied to another input terminal 100b are supplied to a maximum value selecting circuit 100c and a minimum value selecting circuit 100d. The input signal having a larger amplitude, as selected by the maximum value selecting circuit 100c, is supplied to an output terminal 100e, and the input signal having a smaller amplitude, as selected by the minimum value selecting circuit 100d, is supplied to an output terminal 100f. Thus, of the signals applied to the two input terminals 100a and 100b, the signal having the larger amplitude (MAX signal) is developed at the output terminal 100e, whereas the signal having the smaller amplitude (MIN signal) is developed at the output terminal 100f, thereby discriminating between the amplitudes of the input signals. The output terminal 100e is hereinafter referred to as a maximum value output terminal, and the output terminal 100f is hereinafter referred to as a minimum value output terminal.

Referring again to Figure 10, it will be seen that, in the circuit arrangement of the logic circuit there shown, an output signal derived from a maximum value output terminal of the first logical operating circuit 101 and an input signal applied to an input terminal 23 are both supplied to the second logical operating circuit 102. An output signal from a maximum value output terminal of the second logical operating circuit 101 is supplied to a first output terminal 31. An output signal from a minimum value output terminal of the first logical operating circuit 101 and an output signal from a minimum value output terminal of the second logical operating circuit 102 are supplied to a third logical operating circuit 103. An output signal from a maximum value output terminal of the third logical operating circuit 103 is supplied to a second output terminal 32, and an output signal from the minimum value output terminal of the third logical operating circuit 103 is supplied to a third output terminal 33.

Consequently, the input signals applied to the three input terminals 21, 22 and 23 are sorted according to their amplitudes and are supplied through the first, second and third output terminals 31, 32 and 33 in the sequential order of their decreasing amplitudes. Then, an interpolated signal is obtained from an output signal developed at a predetermined one or more of the output terminals 31 to 33 as will be hereinafter described.

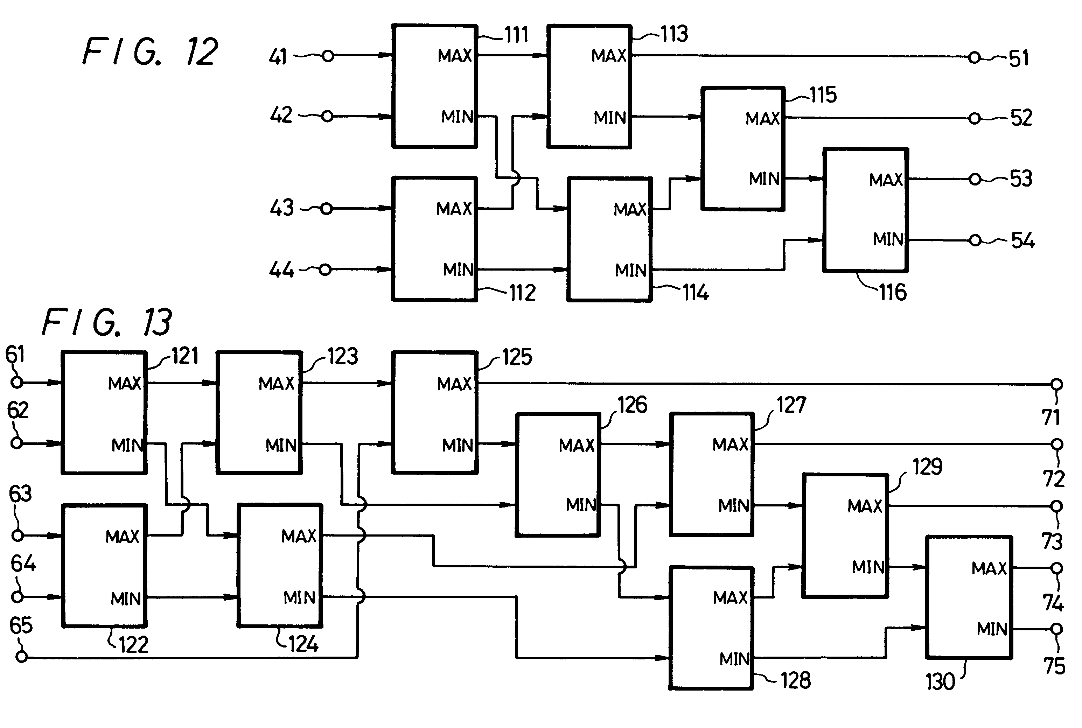

A logic filter with which an interpolated signal may be obtained from four input signals is shown in Figure 12 to generally comprise six logical operating circuits 111 to 116 which may each be similar to the circuit of Figure 11, and, in which input signals applied to input terminals 41 and 42 are supplied to the first logical operating circuit 111, whereas input signals applied to input terminals 43 and 44 are supplied to the second logical operating circuit 112. Output signals from the maximum output terminals of the first and second logical operating circuit 111 and 112 are supplied to the third logical operating circuit 113. Output signals from minimum value output terminals of the first and second logical operating circuits 111 and 112 are supplied to the fourth logical operating circuit 114. An output signal at the maximum value output terminal of the third logical operating circuit 113 is supplied to a first output terminal 51, and an output signal at the minimum value output terminal of the third logical operating circuit 113, and an output signal at the maximum value output terminal of the fourth logical operating circuit 114 are supplied to the fifth logical operating circuit 115. An output signal at the maximum value output terminal of the fifth logical operating circuit 115 is supplied to a second output terminal 52, and output signals at the minimum value output terminals of the fourth and fifth logical operating circuits 114 and 115 are supplied to a sixth logical operating circuit 116. An output signal at the maximum value output terminal of the sixth logical operating circuit 116 is supplied to a third output terminal 53, and an output signal at the minimum value output terminal of the sixth logical operating circuit 116 is supplied to a fourth output terminal 54.

Consequently, the input signals applied to the four input terminals 41, 42, 43 and 44 are sorted according to their amplitudes and are supplied through the first, second , third and fourth output terminals 51, 52, 53 and 54 in the sequential order of their decreasing amplitudes. Then, as hereinafter described, an interpolated signal is obtained from an output signal at a predetermined one or more of the output terminals 51 to 54.

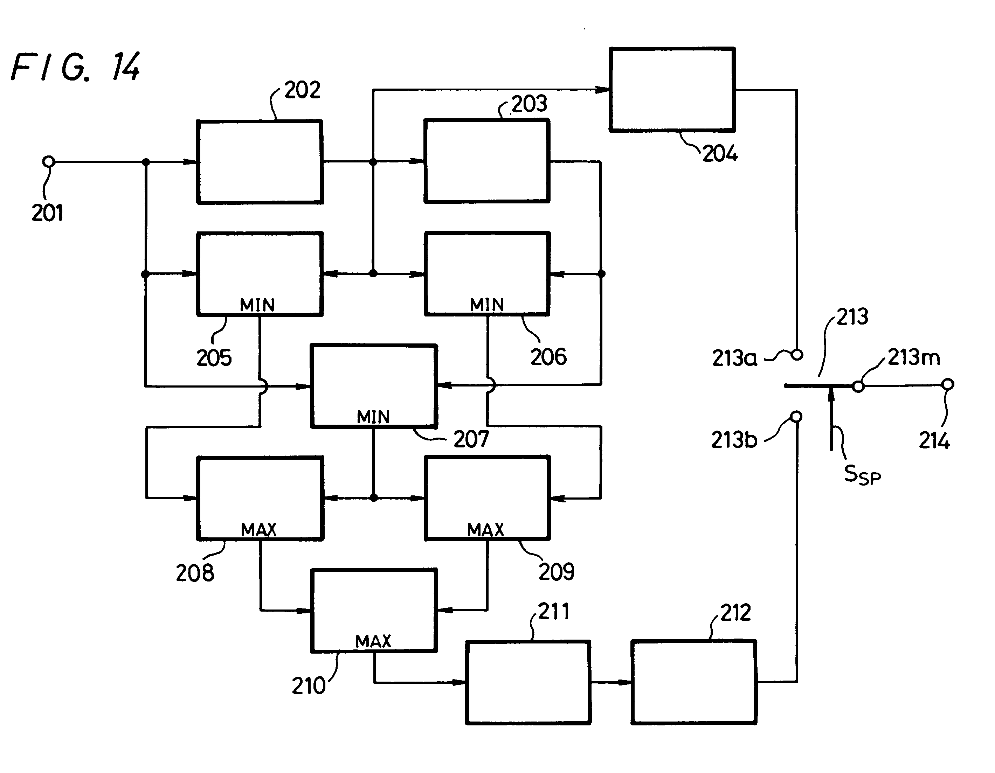

A logic filter with which an interpolated signal may be obtained from five input signals is shown in Figure 13 to generally comprise ten logical operating circuits 121 to 130 which again may be each similar to the circuit of Figure 11, and, in which input signals applied to input terminals 61 and 62 are supplied to the first logical operating circuit 121, whereas input signals applied to input terminals 63 and 64 are supplied to the second logical operating circuit 122. Output signals at maximum value output terminals of the first and second logical operating circuit 121 and 122 are supplied to the third logical operating circuit 123, and output signals at minimum value output terminals of the first and second logical operating circuits 121 and 122 are supplied to the fourth logical operating circuit 124. An output signal at the maximum value output terminal of the third logical operating circuit 123 and a fifth input signal applied to an input terminal 65 are supplied to the fifth logical operating circuit 125. An output signal from a maximum value output terminal of the fifth logical operating circuit 125 is supplied to a first output terminal 71. Output signals at minimum value output terminals of the third and fifth logical operating circuits 123 and 125 are supplied to the sixth logical operating circuit 126.

Further, output signals from maximum value output terminals of the fourth and sixth logical operating circuits 124 and 126 are supplied to the seventh logical operating circuit 127, whereas output signals from minimum value output terminals of the fourth and sixth logical operating circuits 124 and 126 are supplied to the eighth logical operating circuit 128. An output signal at a maximum value output terminal of the seventh logical operating circuit 127 is supplied to a second output terminal 72. An output signal from a minimum value output terminal of the seventh logical operating circuit 127 and an output signal from a maximum value output terminal of the eighth logical operating circuit 128 are supplied to the ninth logical operating circuit 129. An output signal at a maximum value output terminal of the ninth logical operating circuit 129 is supplied to a third output terminal 73, and output signals at minimum value output terminals of the eighth and ninth logical operating circuits 128 and 129 are supplied to the tenth logical operating circuit 130. An output signal at a maximum value output terminal of the tenth logical operating circuit 130 is supplied to a fourth output terminal 74, and an output signal at a minimum value output terminal of the tenth logical operating circuit 130 is supplied to a fifth output terminal 75.

In operation of the logic filter circuit shown in Figure 13, input signals applied to the five input terminals 61, 62, 63, 64 and 65, respectively, are supplied to the first, second, third, fourth and fifth output terminals 71, 72, 73, 74 and 75 in the sequential order of their decreasing amplitudes. Then, as hereinafter described, an interpolated signal is obtained from an output signal at a predetermined one or more of the output terminals 71 to 75.

Although Figures 10, 12 and 13 show logical interpolation filters for use with three, four and five input signals, respectively, in the case of six or more input signals, an interpolation filter for discriminating the amplitudes thereof may be formed by similarly connecting suitable pluralities of maximum and minimum value selecting circuits.

Figure 14 shows the first embodiment of interpolated signal producing circuit for carrying out a non-interlace scanning by doubling horizontal scanning lines of a video signal. A video signal to be linefrequencydoubled is applied to an input terminal 201 and supplied therefrom to a first delay circuit 202 and then to a second delay circuit 203 in succession. In this embodiment, the first delay circuit 202 delays the video signal by a one horizontal scanning period (1H), whereas the second delay circuit 203 further delays the video signal by (1 field - H/2).

The output video signal from the first delay circuit 202 is also supplied through a timebase compressing circuit 204 to a first fixed contact 213a of a change-over switch 213 which will be hereinafter further described. The timebase compressing circuit 204 compresses the timebase of the visual image information of each horizontal scanning line of the video signal supplied thereto to one-half.

A logic or interpolation filter which is similar to that described above with reference to Figure 10 is shown connected to a series circuit of the first and second delay circuits 202 and 203 so as to discriminate between the amplitudes of a pixel signal at the input terminal of the first delay circuit 202, a pixel signal developed at a junction between the first and second delay circuits 202 and 203 and a pixel signal at the output terminal of the second delay circuit 203. In general, this interpolation filter provides an interpolated signal having an intermediate amplitude, that is, the second largest input pixel signal or the second smallest input pixel signal.

More specifically, the amplitudes of the signals at the input and output terminals of the first delay circuit 202 are discriminated by a logical operating circuit 205, and the amplitudes of the signals at the input and output terminals of the second delay circuit 203 are discriminated by a logical operating circuit 206. The amplitudes of the signal at the input terminal of the first delay circuit 202 and of the signal at the output terminal of the second delay circuit 203 are discriminated by a logical operating circuit 207. Signals developed at minimum value output terminals of the logical operating circuits 205 and 207 are supplied to a logical operating circuit 208 which discriminates between the amplitude of the minimum value output from the logical operating circuit 205 and the amplitude of the minimum value output from the logical operating circuit 207. Further, signals developed at minimum value output terminals of the logical operating circuits 206 and 207 are supplied to a logical operating circuit 209 which discriminates between the amplitudes of the minimum value output from the logical operating circuit 206 and the minimum value output from the logical operating circuit 207. Signals developed at maximum value output terminals of the logical operating circuits 208 and 209 are supplied to a logical operating circuit 210 which discriminates between the maximum value output from the logical operating circuit 208 and the maximum value output of the logical operating circuit 209. The signal developed at the maximum value output terminal of the logical operating circuit 210 is supplied through a timebase compressing circuit 211 and a third delay circuit 212 to a second fixed contact 213b of the change-over switch 213 as an output signal of the interpolation filter. The timebase compressing circuit 211 compresses the time base of visual image information of each horizontal scanning line of a video signal supplied thereto to one-half, similarly to the timebase compressing circuit 204. The third delay circuit 212 delays the video signal by H/2.

The change-over switch 213 is suitably responsive to the supply of the video signal alternately to connect a movable contact 213m thereof to the first and second fixed contacts 213a and 213b at every H/2. A video signal developed at the movable contact 213m is supplied to an output terminal 214.

In the circuit of Figure 14, the video signal applied to the input terminal 201 is doubled in line-frequency or horizontal scanning lines, and is supplied from the output terminal 214.

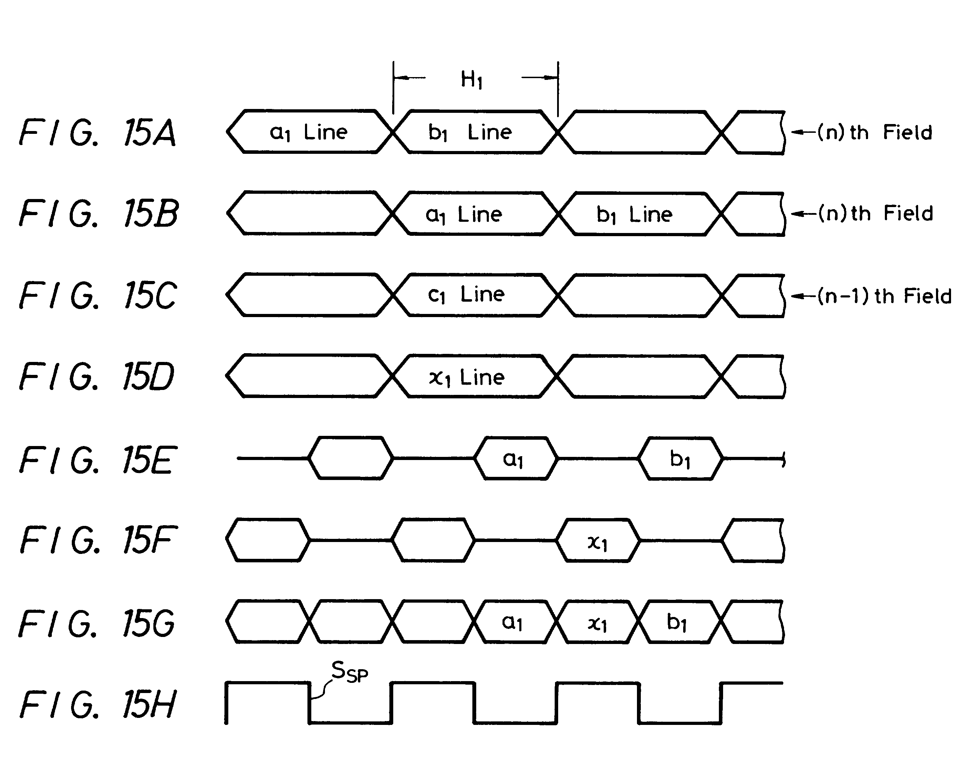

This will be described more fully with reference to Figures 1A to 1C and Figures 15A to 15H. In this connection, it is to be noted that the horizontal lines of the (n)th field containing pixels at points a1 and b1 in Figures 1B are identified as the "a1 line" and "b1 line", respectively, in Figures 15A and 15B, while the horizontal line in the (n-1)th field containing a pixel at a point c1 (Figure 1A) and which is positioned between the a1 line and b1 line is identified as the "c1 line" (Figure 15C). During a predetermined horizontal scanning period H1 in which a video signal of the b1 line in the (n)th field is supplied to the input terminal 201, for example, as shown in Figure 15A, a video signal of the a1 line in the same or (n)th field is developed at the output terminal of the first delay circuit 202, as shown in Figure 15B, and a video signal of the c1 line in the preceding or (n-1)th field is developed at the output terminal of the second delay circuit 203, as shown in Figure 15C. The logical operating circuits 205, 206, 207, 208 209 and 210 discriminate signals of three lines, that is, a signal of the a1 line, a signal of the b1 line and a signal of the c1 line. The amplitudes of these signals are discriminated at every pixel of the three lines, and the logical operating circuit 210 produces an output signal having an amplitude intermediate between the discriminated amplitudes at every pixel. The output signal of intermediate amplitude is provided from the logical operating circuit 210 as an interpolated signal for the x1 line (Figure 15D), that is, the interpolated line in the (n)th field containing the pixel x1 between the pixels a1 and b1 (Figure 1B).

In the second half period of the horizontal scanning period H1 an a1 line signal with its timebase compressed to one-half (Figure 15E) is supplied from the output of the delay circuit 202 and through the timebase compressing circuit 204 to the first fixed contact 213a of the change-over switch 213. A signal of the x1 line, which is an interpolated line, is supplied from the circuit 210 to the second fixed contact 213b with its timebase compressed in the circuit 211 and with a delay time of H/2 imposed in the circuit 212 (Figure 15F). The change-over switch 213 alternately connects its movable contact 213m to its first fixed contact 213a and its second fixed contact 213b at every H/2 in response to a switching pulse signal S_{SP} (Figure 15H), so that the output signal developed at the output terminal 214 is a video signal in which one-half of each horizontal scanning period comprises the signal of the a1 line or the b1 line supplied to the input terminal 201, and the signal of the x1 line, which is an interpolated line, is inserted between the signal of the a1 line and the signal of the b1 line, as shown in Figure 15G. As a result, the video signal developed at the output terminal 214 is a non-interlace scanning signal in which the number of horizontal scanning lines per field is doubled.

The interpolated signal formed by the interpolated signal producing circuit of Figure 14 will be further described with reference to the examples of Figures 2 and 3.

In the case of the still picture shown in Figure 2, a predetermined pixel x1 on the interpolated line formed at the boundary between a white image W (level "1") and a black background B (level "0") is presented as x1 = 1 to form a white pixel by selecting the signal having an intermediate amplitude, because a1 = 1, b1 = 0 and c1 = 1. Thus, a good interpolated signal can be produced. In the case of the real moving picture shown in the example of Figure 3, a predetermined pixel x1' contained in the interpolated line formed in the portion which is included in the white image W in (n)th field and which is included in the black background B in the preceding or (n-1)th field is presented as x1' : = by selecting the signal having an intermediate amplitude because a1' = 1, b1' = 1 and c1' = 0. Accordingly, the pixel x1' becomes a white pixel and thus, a good interpolated signal can also be produced.

It will be appreciated from the above that the embodiment of Figure 14, is effective, whether the input video signal represents a still picture or a real moving picture, to provide an optimum interpolated signal by means of a simplified circuit arrangement which requires no movement detecting circuit, and that an excellent reproduced picture according to the non-interlace scanning system can be obtained from the video signal obtained at the output terminal 214.

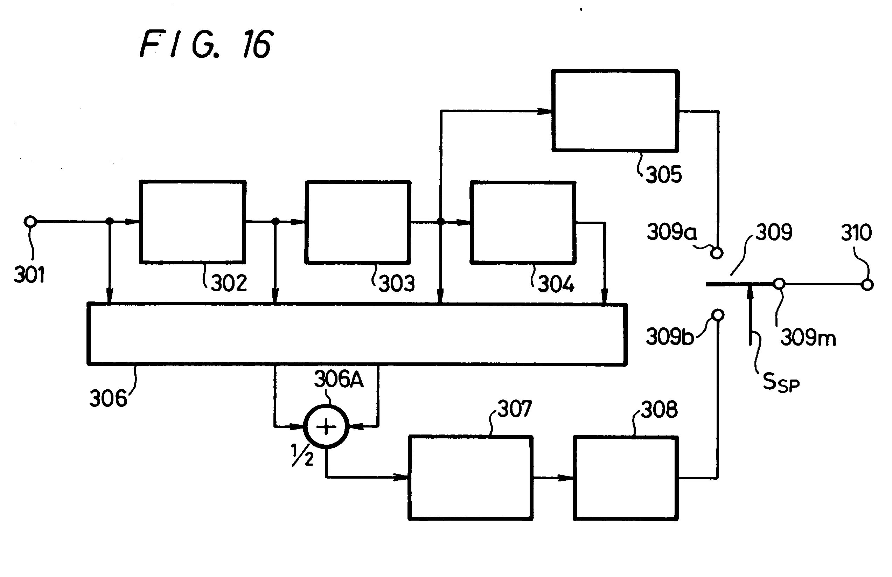

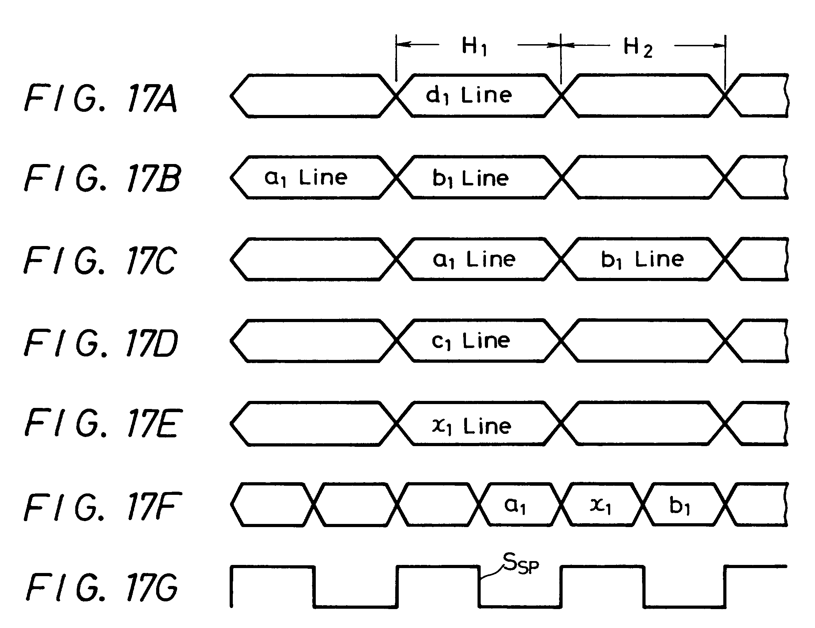

The second embodiment of interpolated signal producing circuit will now be described with reference to Figures 16 and 17A to 17G. This also produces an interpolation signal for non-interlace scanning by doubling the number of horizontal scanning lines of a video signal.

More particularly, in Figure 16, a video signal to be doubled in line-frequency is supplied through an input terminal 301 to a series circuit of first, second and third delay circuits 302, 303 and 304. The first and third delay circuits 302 and 304 delay the video signal by (1 field - H/2), whereas the second delay circuit 303 delays the video signal by 1H.

An output video signal from the second delay circuit 303 is supplied through a timebase compressing circuit 305 to a first fixed contact 309a of a change-over switch 309 which will be hereinafte further described. The timebase compressing circuit 305 compresses the timebase of the visual image information of each horizontal scanning line of the video signal to one-half.

The series circuit formed of the first, second and third dela circuits 302, 303 and 304 is connected with a 4-input interpolatio filter 306 which discriminates the amplitudes of four signals develope at four points, that is, at an input terminal of the first delay circuit 302, a junction between the first and second delay circuits 302 and 303, a junction between the second and third delay circuits 304 and an output terminal of the third delay circuit 304. Although the details of the interpolation filter 306 are not shown in Figure 16, the amplitudes of the four above-mentioned signals may be discriminated by a combination of logical operating circuits generally as shown in Figure 12.

In the circuit of Figure 16, a signal having the second largest amplitude and a signal having the second smallest amplitude are derived from output terminals of the interpolation filter 306, which output terminals may correspond to the terminals 52 and 53 in Figure 12, and these signals are averaged by an averaging circuit 306A to provide an interpolation signal as the output from the circuit 306A. The resulting interpolation signal is supplied from the averaging circuit 306A through a timebase compressing circuit 307 and fourth delay circuit 308 to a second fixed contact 309b of the change-over switch 309. The timebase compressing circuit 307 compresses the timebase of visual image information of each scanning line of a video signal supplied thereto to one-half, similarly to the timebase compressing circuit 305, and the fourth delay circuit 308 delays the video signal by H/2. The change-over switch 309 alternately connects its movable contact 309m to the first and second fixed contact 309a or 309b at every H/2 of the input video signal. The output video signal obtained at the movable contact 309m is doubled in line frequency and is supplied to an output terminal 310.

The operation of the circuit of Figure 16 will be described more fully with reference to FIgures 1A to 1C and Figures 17A to 17G. In this connection, it is again noted that the horizontal lines of the (n)th field containing pixels at a point a1 and a point b1 in Figure 1B are respectively identified as the "a1 line" and "b1 line" in Figure 17B; whereas, the horizontal line in the (n-1)th field containing a pixel at a point c1 and which is located between the a1 line and b1 line is identified as the c1 line (Figure 17D). Further, a horizontal line containing a pixel at a point d1 (Figure 1C) located at the same position as the c1 line but in the (n+1)th field, that is, the field succeeding the field containing the a1 and b1 lines, is identified as the d1 line. During a predetermined scanning period H1 in which a video signal, for example, of the d1 line (Figure 17A) of the (n+1)th field is supplied to the input terminal 301, the first delay circuit 302 provides, at an output terminal thereof, a video signal of the b1 line in the (n)th field (Figure 17B), the second delay circuit 303 provides, at its output terminal, a video signal of the a1 line in (n)th field (Figure 17C) and the third delay circuit 304 provides at its output terminal a video signal of the c1 line in the (n-1)th field, that is, the field before that containing the a1 line, as shown in Figure 17D. Accordingly, the amplitudes of the signals of four lines, that is, the signal of the a1 line, the signal of the b1 line, the signal of the c1 line and the signal of the d1 line, are logically-operated upon, at every pixel, by the interpolation filter 306, and the interpolation filter 306 and the averaging circuit 306A combine to provide a signal having an amplitude intermediate between the amplitudes of the four inputs to the filter 306. This output signal of the interpolation filter 306 and averaging circuit 306A is provided as an interpolated signal in the x1 line (Figure 17E).

Accordingly, in the second half of the horizontal scanning period H1, the signal of the a1 line with its time base-compressed to one-half in the circuit 305 is supplied to the first fixed contact 309a of the change-over switch 309, whereas the signal of the x1 line, which is the interpolated line, with its time base compressed to one-half in the circuit 307 is supplied to the second fixed contact 309b of the switch 309 with a delay time of H/2 in the circuit 308. When the movable contact 309m of the change-over switch 309 is changed in position at every H/2 in response to a switching pulse signal S_{SP} shown in Figure 17G, the signal developed at the output terminal 310 is a video signal which, in one-half of each horizontal scanning period, is constituted by the a1 or b1 line signal, and in which, in the other half of each horizontal period, is constituted by the signal of the x1 line, which is the interpolated line and is inserted between the signal of the a1 line and the signal of the b1 line, as shown in Figure 17F. Therefore, the video signal obtained at the terminal 310 is a non-interlace scanning signal in which the number of horizontal scanning lines of each field is doubled.

Thus, the embodiment of Figure 16 is also effective whether the input video signal represents a still picture or a real moving picture, to provide an excellent interpolation signal by means of the logical interpolation, and a reproduced picture of high definition according to the non-interlace scanning system can be obtained from the output video signal. In the embodiment of Figure 16, the signal states at four points, that is, two points within the field to be interpolated and two points within the immediately preceding and succeeding fields, respectively, are discriminated or sorted as to their amplitudes to produce an interpolated signal, as compared with the first embodiment in which the interpolation signal is produced on the basis of the signal states of only three points. Therefore, it may be anticipated that the interpolated signal can be produced with higher accuracy in the embodiment of Figure 16 than in the embodiment of Figure 14.

While the intermediate amplitude cannot be directly selected by the logical operation in the filter 306 alone when the signal states of four points are discriminated in the embodiment of Figure 16, the second largest signal which is close to the middle amplitude can be employed as the interpolated signal, in which case, the averaging circuit 306A can be omitted. It is also possible that the second smallest signal may be employed as the interpolated signal.

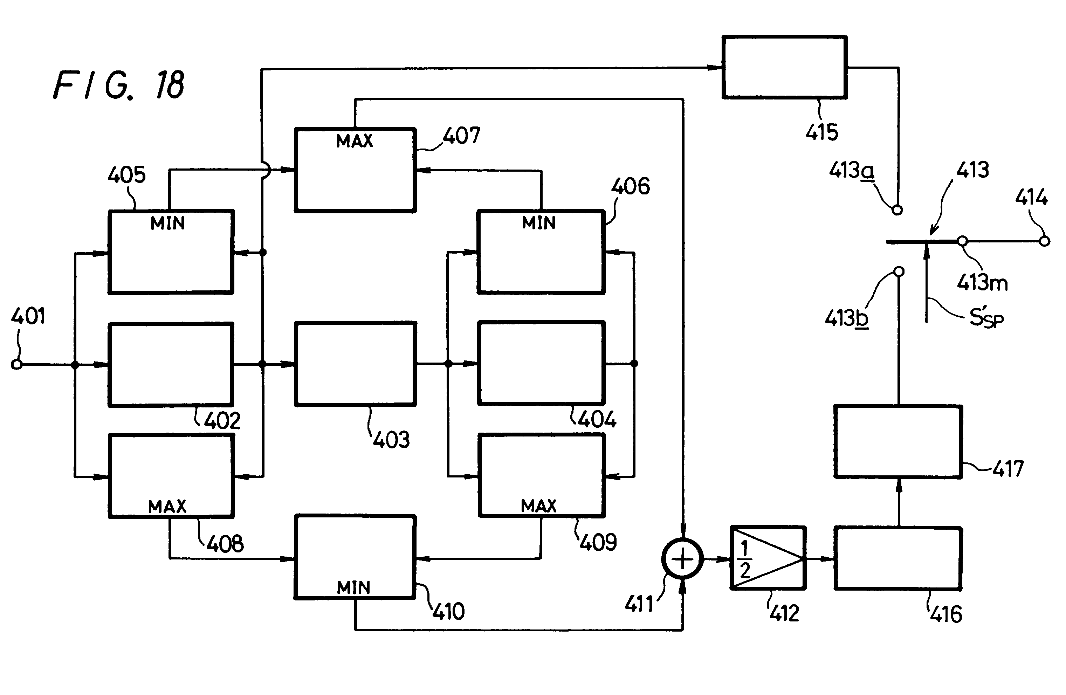

The third embodiment of interpolated signal producing circuit will now be described with reference to Figures 18 and 19A to 19G, and will be seen to be operative to carry out a so-called sub-sampling for doubling the number of pixels within each horizontal scanning line of a video signal.

In the circuit of Figure 18, a video signal to be sub-sampled for doubling the number of pixels in each horizontal scanning line is supplied through an input terminal 401 to a series circuit formed of first, second and third delay circuits 402, 403 and 404. The first delay circuit 402 and the third delay circuit 404 each delay a video signal by a delay time of (1H - 0.5 pixel scanning period), whereas the second delay circuit 403 delays a video signal by a scanning period of one pixel. The output video signal from the first delay circuit 402 is supplied through a timebase compressing circuit 415 to a first fixed contact 413a of a change-over switch 413 which will be hereinafter further described.

A 4-input interpolation filter is connected to the series circuit of the first, second and third delay circuits 402, 403 and 404 to discriminate the second largest signal and the second smallest signal.

More specifically, the amplitudes of the signals at the input and output terminals of the first delay circuit 402 are logically operated on by a logical operating circuit 405, and the amplitudes of the signals at the input and output terminals of the third delay circuit 404 are logically operated on by a logical operating circuit 406. Signals developed at minimum value output terminals of the logical operating circuit 405 and 406 are supplied to another logical operating circuit 407 which supplies the maximum thereof at a maximum value output terminal of the logical operating circuit 407 connected to one input terminal of an adder 411.

The amplitudes of signals at the input and output terminals of the first delay circuit 402 are also logically operated on by a logical operating circuit 408, and the amplitudes of the signals at the input and output terminals of the third delay circuit 404 are also logically operated on by a local operating circuit 409. Signals developed at maximum value output terminals of the logical operating circuits 408 and 409, respectively, are supplied to a logical operating circuit 410. The logical operating circuit 410 determines the lower one of the maximum value output of the logical operating circuit 408 and the maximum value output of the logical operating circuit 409 and provides a corresponding value or amplitude at a minimum value output terminal of the logical operating circuit 410 which is supplied to another input terminal of the adder 411.

The video signals applied to the first and second input terminals of the adder 411 are added therein, and the resulting sum signal is supplied through a 1/2 attenuator 412 so as to be averaged prior being applied to a timebase compressing circuit 416. The resulting timebase compressed signal is supplied through a delay circuit 417 having a delay time of 0.5 pixel to a second fixed contact 413b of the change-over switch 413 which alternately connects its movable contact 413m to the first and second fixed contacts 413a and 413b at every scanning period of 0.5 pixel. The resulting video signal developed at the movable contact 413m and which comprises alternating real pixel signals and interpolation signals is supplied to an output terminal 414.

In operation of the circuit of Figure 18, the video signal applied to the input terminal 401 has the effective number of pixels within each horizontal scanning line doubled prior to being fed to the output terminal 414. This operation will be described more fully with reference to Figures 5A to SC and Figures 19A to 19G.

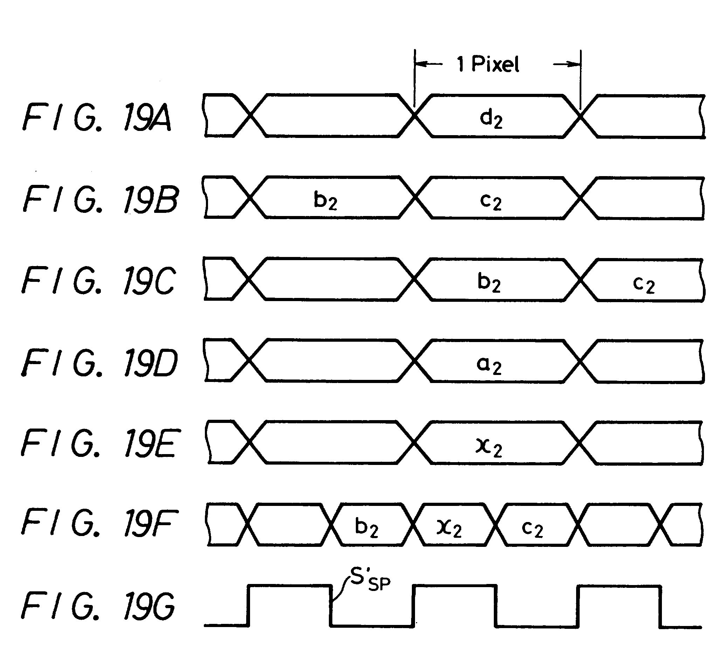

An interpolated pixel point x2 is formed between points b2 and c2 which indicate adjacent pixels on the same horizontal line (Figure 5C), and a point a2 and a point d2 which indicate adjacent pixels on horizontal lines above and below the line of the interpolated point x2. In the period in which a signal of the pixel at the point d2 (Figure 19A) is supplied to the input terminal 401, the first delay circuit 402 provides, at an output terminal thereof, a signal of the pixel at the point c2 in the horizontal line which precedes or is above the line containing the point d2, as shown in Figure 19B. At the same time, the second delay circuit 403 provides, at an output terminal thereof, a signal of the pixel at the point b2 which precedes the point c2 by one pixel as shown in Figure 19C; and the third delay circuit 404 provides, at an output terminal thereof, a signal of the pixel at the point a2 in the horizontal line which precedes or is next above the line containing the points b2 and c2, as shown in Figure 19D. Therefore, signals of the pixels at four points, that is, immediately above and below and to the right and left, respectively, of the desired interpolation pixel x2 are obtained. Consequently, the logical operating circuit 407 provides, as its maximum value output, the pixel signal having the second smallest amplitude from among the pixel signals at the points a2, b2, c2 and d2. Simultaneously, the logical operating circuit 410 provides, as its minimum value output, the pixel signal having the second largest amplitude from among the pixel signals at the points a2, b2, c2 and d2. Then, the pixel signal having the second, or next to the smallest amplitude and pixel signal having the second, or next to the largest amplitude are averaged, that is, added by the adder 411 and level-adjusted by the 1/2 attenuator 412, prior to feeding of the average value through the timebase compressing circuit 415 and the delay circuit 417 to the fixed contact 413b of the change-over switch 413 as the signal of the interpolated pixel at the point x2 (Figure 19E).

Thus, when the change-over switch 413 alternately connects its movable contact 413m to the first and second fixed contacts 413a and 413b at every scanning period of 0.5 pixel in response to a pulse signal S′_{SP} (Figure 19G), the pitch of each pixel is one-half that in the signal applied to the input terminal 401 by reason of the timebase compressing circuit 415, and a signal of an interpolated pixel x2 is similarly compressed and inserted between the compressed signals of pixels existing in the input video signal. In the video signal output from the terminal 414, the number of pixels in each horizontal scanning line is doubled.

The advantageous character of the interpolated signal produced by the interpolated signal producing circuit of Figure 18 will now be described with reference to Figures 6 and 7.

In the case of the still picture shown in Figure 6, when the interpolated pixel x2 is to be formed on the horizontal line within a white portion of the boundary between the white image W (level "1") and the black background B (level "0"), the next to the largest amplitude and the next to the smallest amplitude each become "1" because a2 = 1, b2 = 1, c2 = 1 and d2 = 0. When the next to the largest amplitude = 1 and the next to the smallest amplitude = 1 are averaged by the adder 411 and the t/2 attenuator 412, the result is a white pixel of x2 = 1. Thus, an excellent interpolated signal is generated.

In the case of the real moving picture shown in Figure 7, when the interpolated pixel x2′ is to be formed in a horizontal line at a portion thereof which is included in the white image W in a certain field and which becomes part of the black background B in the immediately-preceding field, a2′ = 1, b2′ = 1, c2′ = 0 and d2′ = 1 are established, whereby the next to the largest amplitude and the next to the smallest amplitude are both presented as "1". When these values are averaged by adder 411 and the 1/1 attenuator 412, the result is an interpolated white pixel which is presented as x2′ = 1. Therefore, a satisfactory interpolated signal is produced.

With the circuit of Figure 18, whether the input video signal represents a still picture or a real moving picture, it is possible to produce an optimum interpolated signal by a simplified circuit arrangement which need not include a movement detection circuit. Accordingly, a high resolution reproduced picture, in which each horizontal scanning line has an increased number of pixels, can be formed from the output video signal.

Further, while the interpolated signal x2 or x2′ for the sub-sampling is formed only from signals of adjacent pixels within the same field, as described above, it is also possible to provide a circuit for discriminating the amplitudes of adjacent pixels in adjacent fields in producing interpolated signals.

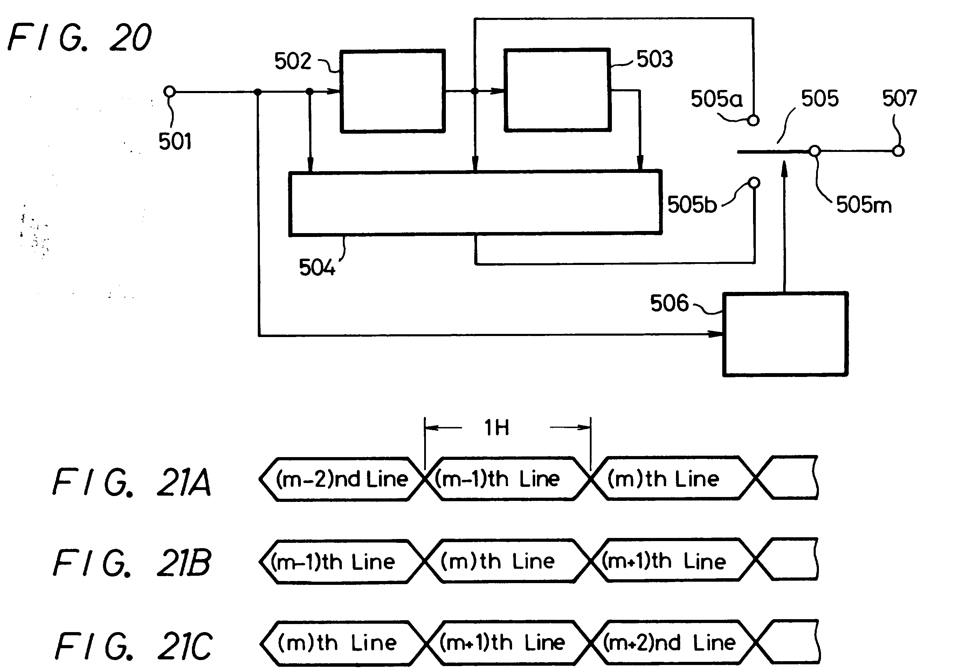

The fourth embodiment of interpolated signal producing circuit will now be described with reference to Figures 20 and 21A to 21C. The circuit of Figure 20 produces interpolated signals for compensating for drop-outs occurring in a video signal reproduced by a video tape reproducing apparatus or the like.

In the circuit of Figure 20 a reproduced video signal is supplied through an input terminal 501 to a first delay circuit 502, and an output signal of the first delay circuit 502 is supplied to a second delay circuit 503. The first and second delay circuits 502 and 503 each delay the video signal by 1H. The output video signal from the first delay circuit 502 is also supplied to a first fixed contact 505a of a change-over switch 505 which will be hereinafter further described.

A 3-input interpolation filter 504 is connected to the series circuit comprising the first and second delay circuits 502 and 503. The 3-input interpolation filter 504 logically operates on the amplitudes of signals developed at three points, that is, at an input terminal of the first delay circuit 502, at a junction between the first and second delay circuits 502 and 503 and at an output terminal of the second delay circuit 503. The interpolation filter 504 provides at an output terminal thereof a signal having an intermediate amplitude (next to the largest or next to the smallest amplitude). An output signal from the interpolation filter 504 is supplied to another fixed contact 505b of the change-over switch 505. The change-over switch 505 is controlled to engage its movable contact 505m with one or the other of the fixed contact 505a and 505b by a drop-out detecting circuit 506 which will be hereinafter explained more fully. A drop-out compensated video signal developed at the movable contact 505m is supplied to an output terminal 507.

The video signal applied to the input terminal 501 is supplied to the drop-out detecting circuit 506. When the drop-out detecting circuit 506 detects that the level of the input video signal is temporarily lowered considerably, for example, due to a drop-out, the movable contact 505m of the change-over switch 505 is engaged with the fixed contact 505b with a delay time of one horizontal scanning period and remains there engaged for so long as the level of the input video signal remains low. When the drop-out detecting circuit 506 does not detect a lowered level of the input video signal, the movable contact 505m is engaged with the fixed contact 505a. By reason of the foregoing operation of the switch 505 under the control of detecting circuit 506, when a drop-out occurs in a video signal applied to the input terminal 501, a drop-out-compensated or interpolated video signal is supplied from the output terminal 507. The foregoing operation will be explained with reference to Figures 21A to 21C.

When a video signal of a predetermined horizontal scanning line, hereinafter referred to as the (m)th line, is supplied to the fixed contact 505a of the change-over switch 505 as an output of the first delay circuit 502, as shown in Figure 21B, the second delay circuit 503 provides, at the output terminal thereof, a video signal of the preceding or (m-1)th line, as shown in Figure 21A, whereas the first delay circuit 502 receives at the input terminal thereof a video signal of the next succeeding or (m+1)th line 1 as shown in Figure 21C. When the drop-out detecting circuit 506 does not detect a drop-out in the input video signal, the engagement of the movable contact 505m with the fixed contact 505a is maintained. When a drop-out occurs in a portion of the input video signal, for example, in the (m)th line to lower its level considerably, the drop-out detecting circuit 506 responds to such drop-out to cause the change-over switch 505 to engage its movable contact 505m with the fixed contact 505b at the time the line containing the drop out, that is, the (m)th line appears at the output of the delay circuit 502.

The in terpolat ion filter 504 compares the amplitudes of the signal of the (m)th line, the signal of the (m+1)th line and the signal of the (m-1)th line at every pixel and produces a signal having an intermediate amplitude which is supplied to the fixed contact 505m of the change-over switch 505. As a result, a signal of the (m)th line having the smallest amplitude, for example, due to the occurrence of drop-out, can be prevented from appearing in the portion in which the drop-out occurs, and is replaced by an interpolated signal having an intermediate amplitude substantially equal to that of the corresponding signal in the (m+1)th line or in the (m-1)th line. This interpolated signal which has the next to the highest, or next to the lowest amplitude of the three signals being compared, is supplied from the output terminal 507 instead of the signal of the (m)th line containing the drop-out.

In effecting drop-out compensation by the circuit of Figure 20, the signal states of three consecutive lines (m-1), (m) and (m+1) are discriminated and the signal of the line most suitable for the interpolation is provided as the interpolated signal so that, as compared with prior circuits in which the drop-out signal is always replaced with the signal of the next above or preceding line, the signal is compensated (or interpolated) more reliably and accurately for preventing substantial deterioration of the quality of the picture upon drop-out compensation.

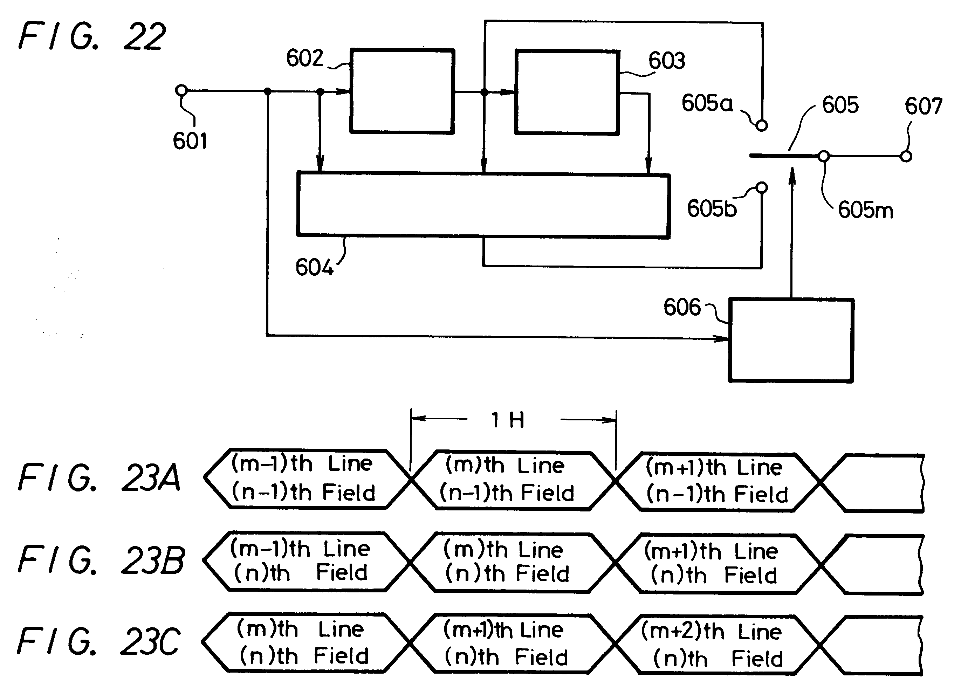

The fifth embodiment of interpolated signal producing circuit will now be described with reference to Figure 22 and Figures 23A to 23C.

The circuit of Figure 22 produces an interpolated signal to compensate for a drop-out occurring in a video signal reproduced by a video tape reproducing apparatus or the like, and is generally similar to the interpolated signal producing circuit described with reference to Figure 20.

Thus, the circuit of Figure 22 has an input terminal 601 through which a reproduced video signal is supplied to a first delay circuit 602, and an output signal of the first delay circuit 602 is supplied to a second delay circuit 603. The first delay circuit 602 delays a video signal by 1H, and the second delay circuit 603 delays a video signal by a delay time of (1 field - H/2). The output video signal from the first delay circuit 602 is also supplied to a fixed contact 605a of a change-over switch 605 which will be hereinafter further described.

A 3-input interpolation filter 604 is connected to a series circuit of the first and second delay circuits 602 and 603, and logically operates on the amplitudes of three signals, that is a signal at an input terminal of the first delay circuit 602, a signal developed at a junction between the first and second delay circuits 602 and 603 and a signal developed at an output terminal of the second delay circuit 603. The interpolation filter 604 provides, at an output terminal thereof, a signal having an intermediate amplitude, that is, the next to the largest or the next to the smallest of the three input signal amplitudes. The output signal of the interpolation filter 604 is supplied to another fixed contact 605b of the change-over switch 605. The change-over switch 605 is controlled so as to engage its movable contact 605m with the fixed contact 605a or 605b by means of a drop-out detecting circuit 606, and a video signal developed at the movable contact 605m is supplied to an output terminal 607.

The video signal applied to the input terminal 601 is also supplied to the drop-out detecting circuit 606. When the drop-out detecting circuit 606 does not detect a drop-out, that is, when the level of the input video signal is not considerably lowered, the change-over switch 605 maintains its movable contact 605m in engagement with the fixed contact 605a. However, when the drop-out detecting circuit 505 detects that a level of the input video signal is temporarily lowered considerably, the change-over switch 605 engages it movable contact 605m with the fixed contact 605b with a delay time of one horizontal scanning period and such engagement continues during the drop-out period.

Thus, when a drop-out occurs in the video signal applied to the input terminal 601, a drop-out compensated video signal is supplied from the output terminal 607 in a manner similar to that described with reference to Figure 20. However, in the case of the embodiment of Figure 22, an interpolated signal is produced by logically operating on the amplitudes of signals of two adjacent horizontal lines in one field and a signal of the next-preceding field so that, even when the signals of adjacent lines are not correlated at all, the drop-out can be compensated satisfactorily.

More specifically, and assuming that a video signal of a predetermined or (m)th horizontal scanning line of a predetermined or (n)th field is supplied to the fixed contact 605a of the change-over switch 605 from the output of the first delay circuit 602, as shown in Figure 23B, then the second delay circuit 603 provides, at the output terminal thereof, a signal of a line near the (m)th line position of the next preceding or (n-1)th field, as shown in Figure 23A, and the input terminal of the first delay circuit 602 receives a signal of the (m+1)th line of the (n)th field, that is, the line next succeeding the (m)th line, as shown in Figure 23C. When the drop-out detecting circuit 606 detects that the level of the input video signal is considerably lowered by a drop-out occurring in a portion of the signal of the (m)th line, the change-over switch 605 engages its movable contact 605m with the fixed contact 605b with a delay time of (1H), that is, at the time when the drop-out signal of (m)th line is coming to the output of the first delay circuit 602. Therefore, the interpolation filter 604 can supply to the output terminal 607 an output signal which results from logically operating on the signal amplitudes of signals of two adjacent lines in one field and the amplitude of a proximate signal in the next preceding field. Consequently, it is frequently observed that the signal developed at the output terminal 607 when a drop-out occurs may be interpolated as a signal of the next preceding field. This depends on the relative amplitudes of the several signals operated upon by the interpolation filter 604. Thus, even when there is no correlation between signals of adjacent lines within one field, a satisfactorily drop-out-compensated signal is supplied from the output terminal 607.

The present invention is not limited to the above-described embodiments, in that, for example the positions of pixels to be supplied to the interpolation filter are not limited to those specifically described, and it is possible to increase the number of pixels to be logically operated on.

By way of summary, it will be noted that a satisfactory interpolated signal can be produced by simplified circuit arrangements in which the amplitudes of signals are logically operated upon. Whether the interpolated signal is for doubling the number of the scanning lines or for sub-sampling or doubling the number of pixels within one scanning line, an excellent interpolated signal can be always obtained without the need to detect motion of a visual image. From this stand-point, the circuit arrangement can be simplified, and resolution of the resulting picture can be increased. In addition, an interpolated signal for compensating for a drop-out can be produced by selecting signals of a plurality of lines for the interpolation so that the proper signal can be interpolated in correspondence to the relative amplitudes or states of the signals.

## Claims

1. An interpolated signal producing circuit comprising:
a delay circuit arrangement, including first, second and third delay circuits (402, 403, 404) connected in series, for receiving a video signal and providing four proximate pixel signals;
a comparator arrangement, comprising first to third minimum circuits (405,406,410) and first to third maximum circuits (408,409,407), for comparing amplitudes of said proximate pixel signals and determining an order of magnitudes of said amplitudes; and
averaging means (411, 412) for averaging a pair of said amplitudes determined according to the order and providing the resulting average signal as an interpolated signal;
characterised in that:
said second delay circuit (403) has a delay time of one pixel period of said video signal, and each of said first and third delay circuits (302, 304) has a delay time equal to one horizontal line period of said video signal less one-half said pixel period, so that a second and third of said proximate pixel signals are derived at outputs of said first and second delay circuits (302, 403), respectively, and correspond to adjacent pixels in one horizontal line, and the first and fourth of the proximate pixel signals are derived at an input to said first delay circuit (402) and at an output of the third delay circuit (404), respectively, and are situated on horizontal lines below and above said one horizontal line between said adjacent pixels in said one horizontal line, said four proximate pixel signals thus relating to pixels in the same field of the video signal; and
said first and second minimum circuits (405, 406) are arranged to determine a first minimum amplitude of the first and second pixel signals and a second minimum amplitude of the third and fourth pixel signals, respectively, said first and second maximum circuits (408, 409) are arranged to determine a first maximum amplitude of the first and second pixel signals and a second maximum amplitude of the third and fourth pixel signals, respectively, said third maximum circuit (407) is arranged to determine a third maximum amplitude of the first and second minimum amplitudes, and said third minimum circuit (410) is arranged to determine a third minimum amplitude of the first and second maximum amplitudes, whereby said pair of amplitudes which are averaged are the next to the largest and the next to the smallest.

2. An interpolated signal producing circuit as claimed in claim 1, wherein the averaging means (411, 412) comprises an adder (411) and an attenuator (412) for averaging the third maximum and third minimum amplitudes.

3. An apparatus for sub-sampling a video signal so as to double the number of pixels within each horizontal scanning line of a displayed picture, the apparatus comprising:
a circuit as claimed in claim 1 or claim 2;
means (415, 416) for timebase-compressing said second pixel signal and said interpolated signal; and
means (413) for alternately outputting the timebase-compressed second pixel signal and interpolated signal as a sub-sampled video signal to be displayed.

## Patentansprüche

1. Schaltung zur Erzeugung eines interpolierten Signals, bestehend aus:
einer Verzögerungsschaltungsanordnung mit einer in Reihe geschalteten ersten, zweiten und dritten Verzögerungsschaltung (402, 403, 404) zum Empfang eines Videosignals und Bereitstellen von vier nahe beieinanderliegenden Pixelsignalen,
einer Komparatoranordnung mit einer ersten bis dritten Minimumschaltung (405,406,410) und einer ersten bis dritten Maximumschaltung (408,409,407) zum Vergleichen von Amplituden der nahe beieinanderliegenden Pixelsignale und Bestimmen einer Größenordnung der Amplituden und
einer Mittelwertbildungseinrichtung (411, 412) zur Mittelwertbildung eines Paares der ordnungsgemäß bestimmten Amplituden und Bereitstellen des resultierenden Mittelwertsignals als interpoliertes Signal,
**dadurch gekennzeichnet,** daß
die zweite Verzögerungsschaltung (403) eine Verzögerungszeit um eine Pixelperiode des Videosignals aufweist und sowohl die erste als auch die dritte Verzögerungsschaltung (402, 404) jeweils eine Verzögerungszeit aufweisen, die gleich einer Horizontalzeilenperiode des Videosignals abzüglich der Hälfte der Pixelperiode ist, so daß ein zweites und drittes der nahe beieinanderliegenden Pixelsignale an Ausgängen der ersten bzw. zweiten Verzögerungsschaltung (402, 403) abgeleitet werden und mit nahe beieinanderliegenden Pixeln in einer Horizontalzeile korrespondieren und das erste und vierte der nahe beieinanderliegenden Pixelsignale an einem Eingang der ersten Verzögerungsschaltung (402) bzw. an einem Ausgang der dritten Verzögerungsschaltung (404) abgeleitet werden und sich auf Horizontalzeilen unter und über der einen Horizontalzeile zwischen den nahe beieinanderliegenden Pixeln in der einen Horizontalzeile befinden, wobei sich die vier nahe beieinanderliegenden Pixelsignale auf diese Weise auf Pixel im gleichen Halbbild des Videosignals beziehen, und daß
die erste und zweite Minimumschaltung (405, 406) so ausgebildet sind, daß sie eine erste Minimumamplitude des ersten und zweiten Pixelsignals und eine zweite Minimumamplitude des dritten und vierten Pixelsignals bestimmen, die erste und zweite Maximumschaltung 408, 409) so ausgebildet sind, daß sie eine erste Maximumamplitude des ersten und zweiten Pixelsignals und eine zweite Maximumamplitude des dritten und vierten Pixelsignals bestimmen, die dritte Maximumschaltung (407) so ausgebildet ist, daß sie eine dritte Maximumamplitude der ersten und zweiten Minimumamplitude bestimmt, und die dritte Minimumschaltung (410) so ausgebildet ist, daß sie eine dritte Minimumamplitude der ersten und zweiten Maximumamplitude bestimmt, wobei die beiden gemittelten Amplituden diejenigen sind, die der größten und der kleinsten am nächsten sind.

2. Schaltung zur Erzeugung eines interpolierten Signals nach Anspruch 1, wobei die Mittelwertbildungseinrichtung (411, 412) einen Addierer (411) und ein Dämpfungsglied (412) zur Mittelwertbildung der dritten Maximum- und dritten Minimumamplitude aufweist.

3. Vorrichtung zum Unterabtasten eines Videosignals zur Verdoppelung der Zahl Pixel in jeder Horizontalabtastzeile eines angezeigten Bildes, bestehend aus
einer Schaltung nach Anspruch 1 oder 2,
einer Einrichtung (415, 416) zur Zeitbasiskompression des zweiten Pixelsignals und des interpolierten Signals und
einer Einrichtung (413) zum abwechselnden Ausgeben des zeitbasiskomprimierten zweiten Pixelsignals und interpolierten Signals als ein anzuzeigendes unterabgetastetes Videosignal.

## Revendications

1. Circuit de production de signal interpolé comprenant :
un agencement de circuit à retard, incluant des premier, deuxième et troisième circuits à retard (402, 403, 404) connectés en série pour recevoir un signal vidéo et pour délivrer quatre signaux de pixels proches ;
un agencement de comparateur, comprenant des premier à troisième circuits à minimum (405,406, 410) et des premier à troisième circuits à maximum (408,409,407), pour comparer les amplitudes desdits signaux de pixels proches, et pour déterminer un ordre des valeurs desdites amplitudes ; et
un moyen de calcul de moyenne (411, 412) pour faire la moyenne d'une paire desdites amplitudes déterminées en fonction de l'ordre et pour délivrer, comme signal interpolé, le signal de moyenne résultant ;
caractérisé :
en ce que ledit deuxième circuit à retard (403) a un temps de retard d'une période de pixel dudit signal vidéo, et chacun desdits premier et troisième circuits à retard (402, 404) a un temps de retard égal à une période de ligne horizontale dudit signal vidéo moins la moitié de ladite période de pixel, de sorte que les deuxième et troisième desdits signaux de pixels proches s'obtiennent, respectivement, aux sorties desdits premier et deuxième circuits à retard (402, 403), et correspondent à des pixels adjacents dans une ligne horizontale, et en ce que les premier et quatrième des signaux de pixels proches s'obtiennent, respectivement, à une entrée dudit premier circuit à retard (401) et à une sortie dudit troisième circuit à retard (404), et sont situés sur des lignes horizontales au-dessous et au-dessus de ladite une ligne horizontale, entre lesdits pixels adjacents dans ladite une ligne horizontale, lesdits quatre signaux de pixels proches se rapportant ainsi à des pixels de la même trame du signal vidéo ; et
en ce que lesdits premier et deuxième circuits à minimum (405, 406) sont agencés pour déterminer, respectivement, une première amplitude minimale des premier et deuxième signaux de pixels et une seconde amplitude minimale des troisième et quatrième signaux de pixels ; en ce que lesdits premier et deuxième circuits à maximum (408, 409) sont agencés pour déterminer, respectivement, une première amplitude maximale des premier et deuxième signaux de pixels et une seconde amplitude maximale des troisième et quatrième signaux de pixels ; en ce que ledit troisième circuit à maximum (407) est agencé pour déterminer une troisième amplitude maximale des première et deuxième amplitudes minimales, et en ce que ledit troisième circuit à minimum (410) est agencé pour déterminer une troisième amplitude minimale des première et deuxième amplitudes maximales ; ce par quoi lesdites deux amplitudes dont on fait la moyenne sont celle qui est la deuxième plus grande et celle qui est la deuxième plus petite.

2. Circuit de production de signal interpolé selon la revendication 1, dans lequel le moyen de calcul de moyenne (411, 412) comprend un additionneur (411) et un atténuateur (412) pour faire la moyenne de la troisième amplitude maximale et de la troisième amplitude minimale.

3. Dispositif pour sous-échantillonner un signal vidéo de façon à doubler le nombre des pixels à l'intérieur de chaque ligne de balayage horizontal d'une image affichée, le dispositif comprenant :
un circuit selon la revendication 1 ou la revendication 2 ;
un moyen (415, 416) pour comprimer en base de temps ledit second signal de pixel et ledit signal interpolé ; et
un moyen (413) pour sortir de façon alternée, comme signal vidéo sous-échantillonné à afficher, le second signal de pixel et le signal interpolé comprimés en base de temps.
